# EUROPÄISCHE PATENTSCHRIFT

(11) **EP 2 565 028 B1**
(45) Veröffentlichungstag und Bekanntmachung des Hinweises auf die Patenterteilung: **07.08.2013**
(21) Anmeldenummer: 12167289.3
(22) Anmeldetag: 09.05.2012
(51) Int. Cl.: B32B 5/02, B32B 5/18, B60N 2/58, D04B 1/16, B32B 5/24, B32B 5/26, B32B 9/02, D04H 13/00

(54) **Textile luftdurchlässige Verbundstoffbahn**
Air-permeable textile composite sheet
Bande de matière composite textile perméable à l'air

(30) Priorität: 30.08.2011 DE 202011051148 U
(43) Veröffentlichungstag der Anmeldung: 06.03.2013
(73) Patentinhaber: Mattes & Ammann GmbH & Co. KG, 72436 Messstetten (Tieringen) (DE)
(72) Erfinder: Larsén, Sven Christopher, 27469 Meßstetten-Tieringen (DE)
(74) Vertreter: Raffay & Fleck

(56) Entgegenhaltungen:
- EP-A1- 1 859 929
- EP-A1- 2 246 183
- EP-A1- 2 338 677
- DE-A1- 19 545 596

## Beschreibung

Die Erfindung betrifft eine textile luftdurchlässige Verbundstoffbahn nach dem Oberbegriff des Anspruchs 1.

Derartige Verbundstoffbahnen gibt es in unterschiedlichsten Ausführungsformen, die sich an den funktionalen Anforderungen orientieren.

Sie stellen Schichtstoffe dar, die durch Verbindung einer oder mehrerer textiler Flächen bzw. Bahnen entstehen, wobei je nach Einsatzzweck die Schaumstoffbahn erhalten bleibt oder als Kleber verschmolzen wird. Synthetische Polymere, wie Polyamid (PA), Polycarbonat (PC), Polyester (PE), Polyether, Polystyrol (PS) und Polyurethan (PU) u.v.m. bilden die Grundlage für Schaumstoffbahnen, deren hydrophiler Charakter durch Cellulose und/oder weitere superabsorbierende Polymere geschaffen wird. Gerade bei Anwendungsgebieten, bei denen die zu Bezugstoffen verarbeitete Verbundstoffbahn einen mehr oder weniger längeren Kontakt mit menschlichen Personen haben, ist eine schnelle und hohe Feuchtigkeitsaufnahme und nach Beendigung der Benutzung entsprechende Abgabe der aufgenommenen Feuchtigkeit in den Umgebungsluft wünschenswert. Es sollte also die klimatische Wirkung gut sein, ohne dass aktiv belüftet werden muss. Auch sollte die Ware den hohen automobilen Anforderungen entsprechen und natürlich preiswert in ihrer Herstellung sein.

Überraschenderweise werden diese Aufgabe und auch die weiteren Ziele erfindungsgemäß durch den eingangs genannten Verbundstoff gelöst, der dadurch gekennzeichnet ist, dass die Maschenwarebahn eine Oberseite aus Kunststoff und eine Unterseite aus Naturfasern oder -partikeln mit hydrophilem Charakter und reversibler Feuchtigkeitsaufnahme und -abgabe umfasst, wobei die Unterseite einseitig mit einem Schaumstoff oder Vlies kaschiert ist. Von besonderer Bedeutung ist also kaschierte Schichtaufbau mit Maschenstruktur, der es gerade bei Kraftfahrzeugsitzen ermöglicht, ausgezeichnete klimatische Verhältnisse zu haben, nämlich bei Benutzung die optimale Aufnahme von Feuchtigkeit, die vom Benutzer abgegeben wird, und die anschließende Abgabe derselbe, wenn sich der Benutzer vom Sitz erhebt und diesen freigibt. Diese Funktion ist auf die in der fertigen Verbundstoffbahn in etwa mittig liegende, die Unterseite der Maschenwarebahn bildende Schicht zurückzuführen, die Naturfasern oder -partikeln umfasst und als Speicher für die Feuchtigkeit dient. Derartige Naturfasern oder -partikel können auch in der Kunststoffschicht der Oberseite vorgesehen werden.

Vorteilhafterweise ist der Anteil der Naturfasern, bei denen es sich insbesondere um Zellulosefasern handelt, äußerster hoch gewählt, nämlich mind. 30 - maximal 70 Gew. %, insbesondere 33 Gew. % bei 67 Gew. % PE. Andere Naturfasern oder -partikel sind jedoch denkbar. Demgegenüber besteht die dem Benutzer zugewandte Oberseite der Verbundstoffbahn geeigneter Weise aus Polyester. Diese Auswahl der Stoffe und ihrer Gewichtsverhältnisse ist bevorzugt, obwohl auch anderen Kunststoffe eingesetzt werden können.

Vorteilhafterweise ist neben der ausgezeichneten Klimagütezahl im Bereich von 13 bis 15 auch bei hohem Flächengewicht > 300g/m² (starke Strapazierfähigkeit: Martindale Scheuertouren > 50.000 und optimalerweise im Bereich von 100.000) eine gute Dehnbarkeit (Dehnwerte 100N längs: 16-18, 100N quer: 46-50) der erfindungsgemäßen Verbundstoffbahn auch bei einer Dicke bis zu 10 mm, insbesondere 3 und 8 mm, gegeben, was insgesamt zu einem angenehmen Sitzkomfort führt, wenn Kfz-Sitze oder Möbel mit der erfindungsgemäßen Verbundstoffbahn überzogen sind. Ähnliches gilt für das Liegen auf Matratzen. Die Herstellung der erfindungsgemäßen Verbundstoffbahn auf einer Rundstrickmaschine sorgt im Übrigen für hohe Meterzahlen pro Zeiteinheit.

Weitere Vorteile und Merkmale gehen aus den Unteransprüchen hervor, die auch gemeinsam mit dem Hauptanspruch von erfindungsgemäßer Bedeutung sein können.

In der Industrie ist vor Kurzem der Klimagütezahlenstrahl (vgl. Dr. Karl Pfahler, Abt. EP/SPP, Bereich Analyse- und Messtechnik, Daimler AG, 29.01.2011) über Dummyversuche aufgestellt worden, um den Klimakomfort von Sitzen, insbesondere Kraftfahrzeugssitzen, mit der sog. Klimagütezahl (GZ) zu quantifizieren.

Generell lässt sich sagen, dass je niedriger die errechnete GZ ist, desto länger dauert es, bis die Schwitzgrenze erreicht wird. Bei GZ unter 10 wird die Schwitzgrenze gar nicht erreicht. Je länger es dauert, bis die Schwitzgrenze erreicht ist, desto besser wird die von oben auf den Sitzbezug aufgebrachte Feuchtigkeit durch die einzelnen Sitzmaterialien abtransportiert. Insofern nimmt der Klimakomfort mit abnehmender Gütezahl zu.

Danach besitzen Schaumsitzstoffbezüge eine GZ von 22 bis 30, während aktiv oder passiv belüftete Sitze eine GZ von 6 bis 7, bzw. 9 bis 14 besitzen. Der GZ-Wert, der mit der vorliegenden Erfindung erzielt werden kann, liegt dem gegenüber zwischen 13 und 15. Da die Toleranzen der einzelnen Messungen nachgewiesener Maßen in einem Bereich von 1 bis 1,25 GZ liegen, kann man ab einer Differenz von 1,25 GZ zwischen zwei Werten von einem signifikanten Unterschied sprechen. Da sich herkömmliche Schaumsitzstoffbezüge mit einer GZ von 22 bis 30 also mindestens um 7 GZ vom erfindungsgemäßen Aufbau der Schaumsitzstoffbezüge unterscheiden, kann man von einer hervorragenden Verbesserung des Klimakomforts durch den erfindungsgemäßen Aufbau sprechen. Der guten Ordnung halber sei an dieser Stelle festgehalten, dass die Gütezahlen des Zahlenstrahls sich alle mit Sitzheizung verstehen.

## Patentansprüche

1. Textile, luftdurchlässige Verbundstoffbahn, insbesondere als Bezugsstoff für Kraftfahrzeugsitze, Matratzen, Möbelpolster und dgl., umfassend eine kaschierte Maschenwarebahn,
**dadurch gekennzeichnet, dass**
die Maschenwarebahn eine Oberseite aus Kunststoff und eine Unterseite aus Naturfasern oder -partikeln mit hydrophilem Charakter und reversibler Feuchtigkeitsaufnahme und -abgabe umfasst, wobei die Unterseite einseitig mit einem Schaumstoff oder Vlies kaschiert ist.

2. Verbundstoffbahn nach Anspruch 1, **dadurch gekennzeichnet, dass** die Oberseite ebenfalls Naturfasern oder -partikel mit hydrophilem Charakter und reversibler Feuchtigkeitsaufnahme und -abgabe umfasst.

3. Verbundstoffbahn nach Anspruch 1 und 2, **dadurch gekennzeichnet, dass** die Oberseite Polyester und die Unterseite und/oder Oberseite Zellulosefasern umfasst.

4. Verbundstoffbahn nach Anspruch 3, **dadurch gekennzeichnet, dass** der Anteil des Polyesters 30-70 Gew. % und der der Zellulosefasern 70-30 Gew. % beträgt,

5. Verbundstoff nach Anspruch 4, **dadurch gekennzeichnet, dass** der Polyester zu 67 Gew. % und die Zellulosefasern zu 33 Gew. % vorliegen.

6. Verbundstoff nach Anspruch 1-5, **gekennzeichnet durch** flamm- oder klebekaschierten Polyurethanschaumstoff, ggf. Zellulosefasern enthaltend, oder Polyestervlies.

7. Verbundstoff nach Anspruch 1-6, **dadurch gekennzeichnet, dass** die kaschierte Verbundstoffbahn eine Dicke von 2-10 mm, insbesondere 3 oder 8 mm, bei einem Fertiggewicht von 280-320 g/m² und einer Klimagütezahl von 13 bis 15, aufweist.

8. Verbundstoffbahn nach Anspruch 1-7, **gekennzeichnet durch** Martindale Scheuertouren von > 50.000, insbesondere > 95.000.

9. Verbundstoffbahn nach Anspruch 1-8 mit Maschenware, hergestellt als Gestrick auf einer Rundstrickmaschine oder als Gewirk auf einer Kettenwirkmaschine.

## Claims

1. Textile, air permeable composite sheet, in particular as a covering material for vehicle seats, mattresses, furniture upholstery and similar, comprising a lined knitted fabric sheet,
**characterised in that**
knitted fabric sheet includes an upper side made of plastic and a lower side composed of natural fibres or particles with hydrophilic property and reversible humidity absorption and dissipation, where the lower side is laminated on one side with a foamed material or a fleece.

2. Composite sheet according to claim 1, **characterised in that** the upper side also comprises natural fibres or particles with hydrophilic property and reversible humidity absorption and dissipation.

3. Composite sheet according to claim 1 and 2, **characterised in that** the upper side comprises polyester and the lower side and/or the upper side cellulose fibres.

4. composite sheet according to claim 3, **characterised in that** the portion of the polyester is 30-70 wt % and that of the cellulose fibres is 70-30 wt%.

5. Composite material according to claim 4, **characterised in that** the polyester accounts for 67 wt % and the cellulose fibres 33 wt %.

6. Composite material according to claim 1-5, **characterised by** flame coated or laminated polyurethane foam, possibly containing cellulose fibres, or polyester fleece.

7. Composite material according to claim 1-6, **characterized in that** the lined composite sheet has a thickness of 2-10 mm, in particular 3 or 8 mm, with a finished product weight of 280-320 g/m² and a climate quality index of 13 to 15.

8. composite sheet according to claim 1-7, **characterised by** Martindale abrasion cycles > 50,000, in particular > 95,000

9. Composite sheet according to claim 1-8 with knitted fabric, manufactured as a knitted fabric on a circular knitting machine or as a warp fabric on a warp knitting machine.

## Revendications

1. Textiles, bande de matériau composite perméable à l'air en particulier comme tissu de revêtement pour sièges automobiles, matelas, sellerie de mobilier et similaire, comprenant une bande tricotée doublée,
**caractérisés en ce que**
la bande tricotée comporte une face supérieure en matériau synthétique et une face inférieure en fibres ou particules naturelles de caractère hydrophile et présentant une absorption et diffusion réversible de l'humidité, où la face inférieure est doublée de mousse ou de non-tissé.

2. Bande de matériau composite selon la revendication 1 **caractérisée en ce que** la face supérieure comprend également des fibres ou particules naturelles de caractère hydrophile et présentant une absorption et diffusion réversible de l'humidité.

3. Bande de matériau composite selon la revendication 1 et 2, **caractérisée en ce que** la face supérieure comporte du polyester et la face inférieure et/ou la face supérieure des fibres de cellulose.

4. Bande de matériau composite selon la revendication 3 **caractérisée en ce que** la part du polyester est de 30-70 % en poids et celle des fibres de cellulose du 70-30 % en poids.

5. Matériau composite selon la revendication 4, **caractérisé en ce que** le polyester entre pour 67 % en poids et les fibres de cellulose pour 33 % en poids.

6. Matériau composite selon la revendication 1-5, **caractérisé par** de la mousse de polyuréthane doublée à la flamme ou stratifiée, le cas échéant contenant des fibres de cellulose, ou du non-tissé en polyester.

7. Matériau composite selon la revendication 1-6 **caractérisé en ce que** la bande de matériau composite doublée présente une épaisseur de 2-10 mm, en particulier de 3 ou de 8 mm, pour un poids de produit fini de 280-320 g/m² et un indice de qualité climatique de 13 à 15.

8. Matériau composite selon la revendication 1-7, **caractérisé par** des cycles d'abrasion Martindale > 50.000, en particulier > 95.000.

9. Matériau composite selon la revendication 1-8 avec un tissu à mailles, fabriqué sous forme de tissu tricoté sur une machine à tricoter circulaire ou de tissu à mailles sur une machine à tricoter chaîne.
